# EUROPEAN PATENT SPECIFICATION

(11) **EP 3 425 330 B1**
(45) Date of publication and mention of the grant of the patent: **01.02.2023**
(21) Application number: 16871781.7
(22) Date of filing: 12.06.2016
(51) Int. Cl.: G01C 3/00, G01C 3/14, G03B 35/10, G03B 17/17, H04N 5/232, G01B 11/02

(54) **DISTANCE MEASUREMENT MODULE AND DISTANCE MEASUREMENT METHOD**
DISTANZMESSMODUL UND DISTANZMESSVERFAHREN
MODULE DE MESURE DE DISTANCE ET PROCÉDÉ DE MESURE DE DISTANCE

(30) Priority: 23.02.2016 CN 201610099285
(43) Date of publication of application: 09.01.2019
(73) Proprietor: BOE Technology Group Co., Ltd., Beijing 100015 (CN); Peking University, Beijing 100871 (CN)
(72) Inventor: WU, Yanbing, Beijing 100176 (CN); ZHANG, Xing, Beijing 100176 (CN); WANG, Yi, Beijing 100176 (CN)
(74) Representative: Klunker IP Patentanwälte PartG mbB
(86) International application number: PCT/CN2016/085416
(87) International publication number: WO 2017/143696

(56) References cited:
- CN-A- 102 183 235
- CN-A- 104 506 842
- CN-A- 104 506 842
- CN-A- 105 627 933
- CN-U- 205 537 631
- JP-A- H0 942 946
- US-A- 4 469 939
- US-A- 4 589 030
- US-A1- 2013 321 790

## Description

### TECHNICAL FIELD

The present invention relates to a distance measuring module, a three-dimensional (3D) scanning system and a distance measuring method.

### BACKGROUND

3D scanning technology is a technology that has been widely concerned in recent years. Kinect of Microsoft Corporation, Primsense purchased by Apple Inc., and Realsense widely popularized by Intel Corporation all belong to 3D scanning technology. The basis of the 3D scanning technology is to adopt a 3D scanner to output a distance from a certain object point in front to an original point of the 3D scanner.

US 4 469 939 A discloses a distance measuring apparatus with first and second imaging lenses for distance measurement for forming images of the same object, a first photoelectric device having a light-receiving surface for receiving the first image by the first imaging lens for distance measurement, a second photoelectric device having a light-receiving surface for receiving the second image by the second imaging lens for distance measurement, and varying means for varying the relative position of the light-receiving surface of the first photoelectric device and the first image thereon and the relative position of the light-receiving surface of the second photoelectric device and the second image thereon. The apparatus detects the distance to the object from the fact that the two relative positions have assumed a predetermined relation. The varying means varies the length of the optical path between the first imaging lens for distance measurement and the light-receiving surface of the first photoelectric device and the length of the optical path between the second imaging lens for distance measurement and the light receiving surface of the second photoelectric device in association with each other, at least one of the two relative positions is varied by said variation, and the first and second images on the light-receiving surfaces of the first and second photoelectric devices which were not clear when the two relative positions were not in said predetermined relation are made clear when the two relative positions have assumed said predetermined relation.

CN 104 506 842 A discloses a three-dimensional camera module, a terminal device and a distance measurement method. The three-dimensional camera module comprises a substrate, a first camera installed on the substrate and facing the first direction and a second camera installed on the substrate and facing the first direction, wherein the first optical axis of the first camera and the second optical axis of the second camera incline relative to the connecting line of the lens center of the first camera and lens center of the second camera, the first optical axis is opposite to a first included angle of the connecting line, the second optical axis is opposite to a second included angle of the connecting line, and at least one of the first included angle and the second included angle is not 90 degrees.

### SUMMARY

It is an object of the present invention to provide a binocular parallax distance measuring module, and a distance measuring method.

The object is achieved by the features of the respective independent claims. Further embodiments are defined in the corresponding dependent claims. Even though the description refers to embodiments or to the invention, it is to be understood that the invention is defined by the claims and embodiments of the invention are those comprising at least all the features of one of the independent claims.

### BRIEF DESCRIPTION OF THE DRAWINGS

Embodiments of the present invention will be described in more detail below with reference to accompanying drawings to allow an ordinary skilled in the art to more clearly understand embodiments of the present invention, in which:
FIG. 1 shows the relationship between the identification distance and the measuring precision of a binocular distance measuring system for large-size products;
FIG. 2 is a schematic structural view of a distance measuring module provided by an embodiment of the present invention;
FIG. 3 is a structural block diagram of the distance measuring module provided by an embodiment of the present invention;
FIG. 4 is a schematic structural view of another distance measuring module provided by an embodiment of the present invention; and
FIG. 5 is a schematic structural view of still another distance measuring module provided by an embodiment of the present invention.

### DETAILED DESCRIPTION

In order to make objects, technical details and advantages of the embodiments of the present invention apparent, technical solutions according to the embodiments of the present invention will be described clearly and fully as below in conjunction with the accompanying drawings of embodiments of the present disclosure. The described embodiments are just a part but not all of the embodiments of the invention.

Unless otherwise defined, all the technical and scientific terms used herein have the same meanings as commonly understood by a person of ordinary skill in the art to which the present disclosure belongs. The terms, such as "first," "second," or the like, which are used in the description and the claims of the present disclosure, are not intended to indicate any sequence, amount or importance, but for distinguishing various components. The terms, such as "comprise/comprising," "include/including," or the like are intended to specify that the elements or the objects stated before these terms encompass the elements or the objects and equivalents thereof listed after these terms, but not preclude other elements or objects. The terms, such as "connect/connecting/connected," "couple/coupling/coupled" or the like, are not intended to define a physical connection or mechanical connection, but may include an electrical connection/coupling, directly or indirectly. The terms, "on," "under," "left," "right," or the like are only used to indicate relative position relationship, and when the position of the object which is described is changed, the relative position relationship may be changed accordingly.

3D scanning technology for binocular parallax distance measurement is one of the important technologies in stereo vision distance measuring technology, which acquires the distance of an object by a camera to determine the difference of the position of the same object in two imaging pictures.

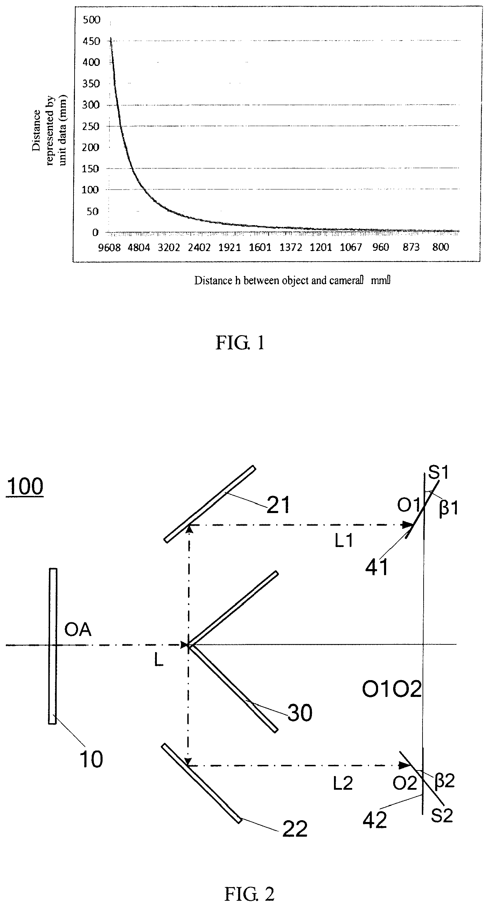

In binocular parallax distance measurement, the depth is calculated according to the depth of focus, and the farther the object is, the lower the resolution. FIG. 1 shows the relationship between the identification distance and the measuring precision of a binocular stereo vision device (with the binocular distance of 12cm) for large-size products, in which the x-coordinate represents the distance between the camera and the object, and the y-coordinate represents the distance indicated by the unit data (for example, 1) at this distance. As shown in FIG. 1, the greater the distance between the camera and the object is, the greater the distance represented by the unit data is, namely the lower the measuring precision is. In application, in order to improve the long-distance measuring precision, the distance between two cameras is usually required to be increased. When the distance between the two cameras is greater, the space occupied by a binocular distance measuring device is larger, so the volume of a terminal device for accommodating the binocular distance measuring device is bound to be increased, and the miniaturization and the ultrathin design of the terminal device can be affected.

The distance measuring module, the 3D scanning system including the distance measuring module, and the distance measuring method using the distance measuring module, provided by embodiments of the present disclosure, can improve the distance measuring precision and widen the measuring range without changing the distance between components of the distance measuring module, namely not increasing the size of the distance measuring module.

The distance measuring module includes a camera. The camera includes: a lens assembly, a first mirror, a second mirror, a first image sensor and a second image sensor. The lens assembly includes a lens group and has an optical axis. The first mirror and the second mirror are configured to reflect imaging light from the lens assembly. The first image sensor corresponds to the first mirror and is configured to receive imaging light from the first mirror for imaging. The first image sensor includes a first photosensitive surface having a center point. The second image sensor corresponds to the second mirror and is configured to receive imaging light from the second mirror for imaging. The second image sensor includes a second photosensitive surface having a second center point. A connecting line of the first center point and the second center point is perpendicular to the optical axis of the lens assembly. The first photosensitive surface and the second photosensitive surface are inclined relative to the connecting line of the first center point and the second center point. A first included angle is formed between the first photosensitive surface and the connecting line. A second included angle is formed between the second photosensitive surface and the connecting line. At least one of the first included angle or the second include angle is not zero.

In the distance measuring module, as the first image sensor and the second image sensor are inclined and no longer perpendicular to the optical axis of the lens assembly, the distance from an image point of the same object formed in each of the two image sensors to the center point of the image sensor can be increased. In this way, the distance measuring precision can be improved and the measuring range can be prolonged. The embodiments of the present disclosure can improve the measuring precision on long-distance objects without changing the distance between components of the distance measuring module. The distance measuring precision can be improved without increasing the size of the distance measuring module. The miniaturization and the ultrathin design of the distance measuring module and the 3D scanning system for accommodating the distance measuring module can be realized, and the portability is improved. Detailed description will be given below to the distance measuring module, the 3D scanning system including the distance measuring module, and the distance measuring method using the distance measuring module, provided by embodiments of the present disclosure, with reference to the accompanying drawings.

An embodiment of the present disclosure provides a distance measuring module. FIG. 2 is a schematic structural view of the 3D camera module. As shown in FIG. 2, the distance measuring module includes a camera 100. The camera 100 includes: a lens assembly 10, a first mirror 21, a second mirror 22, a first image sensor 41 and a second image sensor 42. The lens assembly 10 includes a lens group and has an optical axis OA. The first mirror 21 and the second mirror 22 are configured to reflect imaging light L from the lens assembly 10. The first image sensor 41 corresponds to the first mirror 21 and receives imaging light L1 from the first mirror 21 for imaging. The first image sensor 41 includes a first photosensitive surface S1 having a first center point O1. The second image sensor 42 corresponds to the second mirror 22 and receives imaging light L2 from the second mirror 22 for imaging. The second image sensor 42 includes a second photosensitive surface S2 having a second center point O2.

Herein, a connecting line O1O2 of the first center point O1 and the second center point O2 is perpendicular to the optical axis OA of the lens assembly; the first photosensitive surface S1 and the second photosensitive surface S2 are inclined relative to the connecting line 0102; a first included angle β1 is formed between the first photosensitive surface S1 and the connecting line 0102; and a second included angle β2 is formed between the second photosensitive surface S2 and the connecting line 0102.

For instance, in the embodiment of the present disclosure, at least one of the first included angle β1 or the second included angle β2 is not zero. Accordingly, the first photosensitive surface S1 is inclined and the second photosensitive surface S2 is perpendicular to the optical axis OA of the lens assembly; or the second photosensitive surface S2 is inclined and the first photosensitive surface S1 is perpendicular to the optical axis OA of the lens assembly; or both the first photosensitive surface S1 and the second photosensitive surface S2 are inclined.

Herein, for the sake of convenient description, the first included angle and the second included angle refer to angles formed between the connecting line 0102 and the photosensitive surfaces, respectively. For instance, each angle may be a clockwise angle or a counterclockwise angle.

It is noted that: in the embodiment of the present disclosure, for the sake of simplification and convenient description, the center point of the photosensitive surface may be equivalent to the center point of the image sensor.

Exemplarily, at least one of the first included angle β1 or the second included angle β2 is greater than 0° and less than or equal to 90°.

As shown FIG. 2, since the photosensitive surface is inclined, the distance from an image point of an object to be measured on the image sensor to the center point of the photosensitive surface can be increased, so that the distance measuring precision can be improved under a condition that the density of the image sensors is constant.

For instance, in order to further improve the distance measuring precision, at least one of the first included angle β1 or the second included angle β2 may be greater than or equal to 70° and less than 90°. But the embodiments of the present disclosure are not limited thereto. For instance, at least one of the first included angle β1 or the second included angle β2 may be other angles, e.g., greater than or equal to 50°, 55°, 60° or 65° and less than 90°.

Exemplarily, the first included angle may be equal to the second included angle. The example in FIG. 2 only shows the instance that the first included angle is equal to the second included angle. But the embodiments of the present disclosure are not limited thereto.

It is noted by an ordinary skill in the art that: the inclining angle of the first image sensor relative to the connecting line 0102 may be not equal to the inclining angle of the second image sensor relative to the connecting line 0102, and the two inclining angles may be slightly different; or one of the first image sensor and the second image sensor may be inclined and the other one may be not inclined. Exemplarily, the first image sensor and the second image sensor are symmetrically arranged relative to an axis which runs through a midpoint of the connecting line 0102 of the first center point and the second center point and is perpendicular to the connecting line, namely the optical axis OA of the lens assembly, as shown by the example in FIG. 2.

In one or more implementations, as for a single-lens binocular parallax distance measuring module, as shown in FIG. 2, the camera 100 may also include an optical splitting system 30 which is disposed in the optical path from the lens assembly 10 to the first mirror 21 and the second mirror 22, and configured to transmit the imaging light L from the lens assembly 10 to the first mirror 21 and the second mirror 22, respectively.

It is noted that: for the convenience of description, description is given in FIG. 2 by taking the light L vertically incident into the lens assembly as an example. But the embodiments of the present disclosure are not limited thereto. For instance, light from the object to be measured may also be obliquely incident into the camera lens.

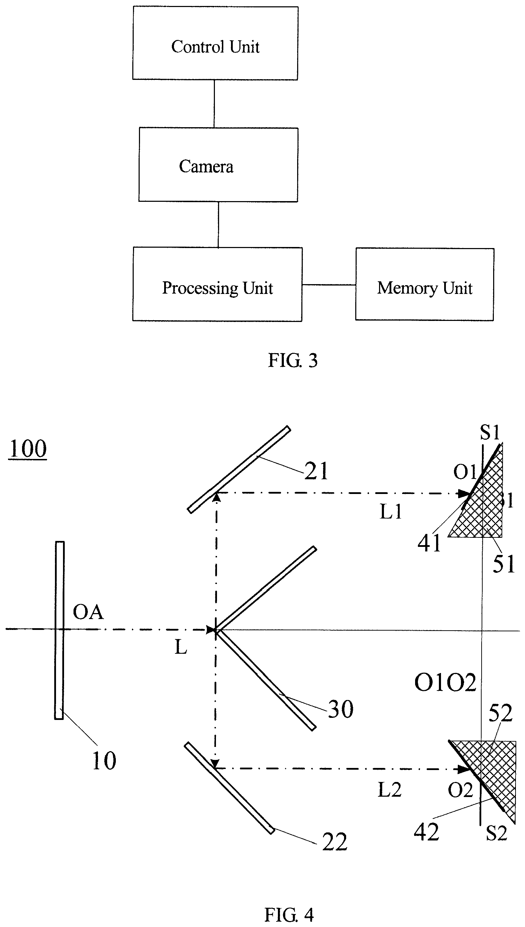

Exemplarily, as shown in FIG. 3, the distance measuring module provided by the first embodiment of the present disclosure not only includes the camera but also may include: a memory unit configured to store image information shot by the camera; a processing unit configured to process the image information; and a control unit configured to control the shooting action of the camera.

The memory unit, for instance, may be a read-only memory (ROM) or a random access memory (RAM), e.g., a flash memory. The control unit may be a motor, or the like.

For instance, the processing unit may be a digital signal processor (DSP). The two image sensors may share one DSP, or respectively adopt respective DSP. The DSPs may be implemented by a general-purpose computing device or a special-purpose computing device.

Exemplarily, the lens assembly in the embodiment of the present disclosure may be implemented by any micro lens made from glass or plastic materials, and the camera 100 may also be a camera provided with an infrared filter.

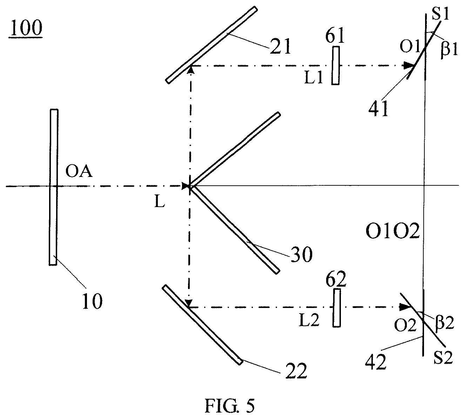

The camera includes a first optical module 61 disposed between the first mirror 21 and the first image sensor 41 and configured to lead the imaging light emitted from the mirror 21 to the first image sensor 41; and a second optical module 62 disposed between the second mirror 22 and the second image sensor 42 and configured to lead the imaging light emitted from the second mirror 22 to the second image sensor 42, as shown in FIG. 5. The first optical module 61 and the second optical module 62 are one group of optical elements comprising mirrors and optionally also lenses.

Exemplary description will be given below to the inclined arrangement mode of the first image sensor and the second image sensor in the distance measuring module.

### First Example

Exemplarily, in order to obliquely arrange the image sensors, the distance measuring module may include a loading platform; the first image sensor 41 and the second image sensor 42 may be disposed on the loading platform; and the loading platform may be directly disposed on an outer housing of the distance measuring module.

Exemplarily, a single loading platform may be provided; a side surface provided with the first image sensor and a side surface provided with the second image sensor, of the loading platform, are inclined relative to the connecting line 0102 of the first center point O1 and the second center point O2, and the inclining angle of the side surface is the same as the included angle between the first image sensor or the second image sensor, disposed on the side surface, and the connecting line O1O2. On the other hand, due to process deviation, the angles may not be strictly equal but slightly different, and the deviation is within a tolerance or an allowable error range. For instance, a side surface of the loading platform provided with a first camera and a side surface provided with a second camera may be symmetrically relative to an axis which runs through the midpoint of the connecting line 0102 of the first center point O1 and the second center point O2 and is parallel to the optical axis OA.

For instance, two loading platforms may be provided; each image sensor is respectively disposed on the independent loading platform; a side surface of each loading platform provided with the image sensor is inclined relative to the connecting line 0102; and the inclining angle relative to the connecting line 0102 is equal to the inclining angle of the image sensor, disposed on the loading platform, relative to the connecting line 0102. FIG. 4 is a structural view of one example of the distance measuring module provided by the embodiment of the present disclosure. As shown in FIG. 4, the first image sensor 41 and the second image sensor 42 are respectively disposed on loading platforms 51 and 52.

Exemplarily, the cross section of the loading platform may be a triangle as shown in FIG. 4, or may be a trapezoid. But the embodiments of the present disclosure are not limited thereto. For instance, the shape of the cross section of the loading platform may also be set to be the shape which allows the inclining angles of the first image sensor and the second image sensor relative to the connecting line 0102 to be equal to the inclining angles of corresponding image sensors.

Herein, the loading platforms may be made from insulating materials having supporting function, and the image sensors may be mounted on the loading platform(s) by multiple ways. For instance, a mounting groove may be formed in the loading platform(s); an inner wall of the mounting groove may be provided with threads; each image sensor may be accommodated into a shell; an outer wall of the shell may be provided with threads; in this way, the image sensor can be fastened by threaded engagement; or mounting holes may be formed in the loading platform(s), and the image sensor is fixed or fastened on the loading platform(s) by rivets, bolts, or the like. But the embodiments of the present disclosure are not limited thereto.

In addition, for instance, through holes may be formed in the loading platform(s), and a connector of the image sensor is electrically connected to a printed circuit board (PCB) or a flexible circuit board via the through holes.

Exemplarily, the image sensor may also be disposed in a tilting way via a rigid support provided with a bend angle at a thin end of the rigid support. For instance, the image sensor is fixed on the rigid support by bolts and rivets; one end of the rigid support provided with the bend angle is fixed on the outer housing of the distance measuring module; and the bend angle may be equal to the inclining angle of the image sensor relative to the connecting line 0102.

### Second Example

The first image sensor 41 and the second image sensor 42 may be respectively disposed on two PCBs; each PCB may be disposed in a tilt way; and the tilt of the image sensor relative to the connecting line 0102 is achieved by the tilted arrangement of the PCB.

Exemplarily, the two PCBs provided with the image sensors may be further disposed on a loading platform(s) provided with two inclined slopes; and the loading platform(s) is/are disposed on the outer housing of the distance measuring module.

For instance, the two inclined slopes may be symmetrical relative to the optical axis OA, and the slope angle of each inclined slope is equal to the inclining angle of the two image sensors relative to the connecting line 0102, respectively. The slope angle of the inclined slope and the inclining angle of the image sensor may be slightly different within the tolerance range, which shall fall within the scope of the embodiments of the present disclosure.

Exemplarily, the cross section of loading platform(s) provided with the inclined slopes may be an isosceles triangle or an isosceles trapezoid. The embodiments of the present disclosure are not limited thereto.

In addition, the two PCBs provided with the first image sensor 41 and the second image sensor 42 may be disposed on one loading platform or disposed on two loading platforms, respectively. Herein, the loading platform in the first example is also applicable to the second example. In this way, no further description will be given here to the structure of the loading platform.

The mounting mode of the two PCBs and the loading platforms may adopt riveting, welding, bolted connection, or the like, so that the fixed connection of the PCBs can be achieved. But the embodiments of the present disclosure are not limited thereto.

Description is given above only to the connecting and fixing ways for the instance that the inclining angles of the first camera and the second camera relative to the connecting line 0102 are equal to each other. But it can be readily contemplated by an ordinary skill in the art that the above ways are also applicable to the instance of unequal inclining angles. The slight difference is in that: for instance, for the loading platform, in the instance that the inclining angles are not equal to each other, the inclining angles of the surfaces provided with the image sensors relative to the connecting line 0102 correspond to the inclining angles of the image sensors, so the inclining angles of the surfaces provided with the image sensors relative to the connecting line 0102 are also different from each other. Other connecting and fixing ways are also similar. For the sake of clear and simple description, no further description will be given here.

It should be noted by an ordinary skill in the art that: in an embodiment of the present disclosure, for instance, a camera, with a resolution of 1280*720, a horizontal and vertical field of view FOV(α, β) of FOV(75,60), and a focal length of 2.4mm, may be adopted.

Exemplarily, the first image sensor and the second image sensor in the embodiments of the present disclosure may be image sensors of the same type or different types. The image sensor may be a charge-coupled device (CCD) image sensor, a complementary metal-oxide semiconductor (CMOS) image sensor, or the like; or the two image sensors may be CCD image sensors, CMOS image sensors or the like with different specifications. But the embodiments of the present disclosures are not limited thereto.

In the distance measuring module provided by the embodiments of the present disclosure, as the two image sensors are inclined relative to the connecting line of the center points of the two photosensitive surfaces of the two image sensors, the distance between the image point of the same object formed in each of the two image sensors and the center point of the image sensor can be increased. In this way, the distance measuring precision can be improved and the measuring range can be widened. Moreover, the distance measuring module provided by the embodiments of the present disclosure can improve the measuring precision on the long-distance object without changing the size of the current distance measuring module, which is advantageous in the miniaturization and the ultrathin design of the distance measuring module and the 3D scanning system for accommodating the distance measuring module, and improvement of the portability. Moreover, for instance, as the two image sensors in the 3D camera module have exactly the same inclining angle, the distance measuring precision on the long-distance object can be further improved, which is more advantageous in the miniaturization and the ultrathin design of the distance measuring module and the 3D scanning system for accommodating the distance measuring module can be more conducive to achieve; and the portability can be further improved.

Herein, it should be noted that the foregoing only illustrates the proposal of inclined arrangement of the image sensors. Moreover, for instance, the distance measuring precision may also be improved by adjusting the deflection angle of the first mirror and the second mirror in the distance measuring module. For instance, the projection position and the projection angle of the imaging light reflected by the mirror on the image sensor is adjusted by adjusting the deflection of the mirror, so that the distance from an image point of an object formed on the image sensor to the center of the photosensitive surface of the image sensor can be increased, and the distance measuring precision can be improved. The proposal of adjusting the mirrors may be independently used, or may be combined with the proposal of the inclined arrangement of the image sensors. But the embodiments of the present disclosure are not limited thereto. For instance, other usage modes capable of increasing the distance from the image point of the object formed on the image sensor to the center of the photosensitive surface may also be adopted.

In addition, an embodiment of the present disclosure also provides a distance measuring method, particularly a distance measuring method using any of the distance measuring modules. The distance measuring method provided by the embodiment of the present disclosure includes following steps.
S1: taking an image of an object via the camera of the distance measuring module; and
S2: determining the vertical distance h from the object to be measured to the camera according to two image points of the object to be measured formed in the first image sensor and the second image sensor of the camera.

The camera includes a lens assembly. The lens assembly includes a lens group and has an optical axis. The camera also includes a first mirror and a second mirror which are configured to reflect imaging light from the lens assembly. The first image sensor corresponds to the first mirror and is configured to receive imaging light from the first mirror for imaging. The first image sensor includes a first photosensitive surface having a first center point. The second image sensor corresponds to the second mirror and is configured to receive imaging light from the second mirror for imaging. The second image sensor includes a second photosensitive surface having a second center point.

A connecting line of the first center point and the second center point is perpendicular to the optical axis of the lens assembly. The first photosensitive surface and the second photosensitive surface are inclined relative to the connecting line of the first center point and the second center point. A first included angle is formed between the first photosensitive surface and the connecting line. A second included angle is formed between the second photosensitive surface and the connecting line. At least one of the first included angle or the second included angle is not zero.

In the distance measuring method using the foregoing distance measuring module, provided by the embodiment of the present disclosure, the two image sensors are inclined relative to the connecting line of the center points of the photosensitive surfaces, the distance from an image point of the same object formed in each of the two image sensors to the center point of the photosensitive surface can be extended or prolonged. In this way, the distance measuring precision can be improved and the measuring range can be widened.

In addition, an embodiment of the present disclosure also provides a 3D scanning system, which includes the distance measuring module provided by the embodiments.

The 3D scanning system provided by the embodiment of the present disclosure further includes: an housing, in which the distance measuring module is disposed on the inside or the outside of the housing.

For instance, when the distance measuring module is disposed on the inside of the housing, the housing is provided with a camera hole, and the lens assembly of the distance measuring module is exposed to the outside through the camera hole.

For instance, when the distance measuring module is disposed on the outside of the housing, the distance measuring module also includes a shell for accommodating the lens assembly, the image sensors, the DSPs, or the like of the distance measuring module. The distance measuring module is connected to a main control circuit of the 3D scanning system through a lead, a universal serial bus (USB) interface, a serial interface, or a parallel interface. For instance, the 3D scanning system also includes an output device, such as a display screen.

Exemplarily, the 3D scanning system provided by the embodiment not being part of the claimed invention may be a tablet PC, a smart mobile phone, a notebook computer, a desktop, a navigator, or the like. The distance measuring module provided by the embodiment of the present disclosure may also be applied in other terminal devices. The embodiments of the present disclosure are not limited thereto.

In addition, it should be noted that description is given in the embodiments of the present disclosure by only taking the binocular parallax distance measuring module provided with two image sensors, the 3D scanning system and the distance measuring method using the two image sensors as examples, the technical proposals of the embodiments of the present disclosure are also applicable to a distance measuring module provided with a plurality of image sensors, a 3D scanning system and a distance measuring method using a plurality of image sensors. For instance, some image sensors are inclined and the remaining image sensors are not inclined, or all the image sensors are inclined. The embodiments of the present disclosure are not limited thereto. In addition, it should be noted that the optical axis of the lens assembly in the embodiments of the present disclosure refers to a primary optical axis and is a connecting line of lens centers of coaxial lenses in the lens group of the lens assembly.

In the 3D scanning system including the distance measuring module, provided by the embodiments not being part of the claimed invention, 2. the two image sensors are inclined relative to the connecting line of the centers of the photosensitive surfaces of the two image sensors, the distance from an image point of an object formed in each of the two image sensors to the center of the photosensitive surface can be increased. In this way, the distance measuring precision can be improved and the measuring range can be widened. Moreover, the distance measuring precision can be improved without increasing the size of the distance measuring module, so the miniaturization and the ultrathin design of the 3D scanning system can be achieved, and the portability can be improved.

Herein, it should be noted that the foregoing is the proposals of inclined arrangement of the image sensors. Moreover, the distance measuring precision may also be improved by adjusting the deflection angle of the first mirror and the second mirror in the distance measuring module. For instance, the projection position and the projection angle of the imaging light reflected by the mirror on the image sensor is adjusted by adjusting the deflection of the mirror, so that the distance from an image point of an object formed on the image sensor to the center of the photosensitive surface of the image sensor can be increased, and the distance measuring precision can be improved. The proposal of adjusting the mirror may be independently used or may be combined with the proposal of inclined arrangement of the image sensors. But the embodiments of the present disclosure are not limited thereto. For instance, other usage modes capable of increasing the distance from the image point of the object formed on the image sensor to the center of the photosensitive surface may also be adopted. The described above are only exemplary embodiments of the present disclosure, and the present disclosure is not intended to be limited thereto. For one of ordinary skill in the art, various changes and alternations may be made without departing from the technical scope of the appended claims, and all of these changes and alternations shall fall within the scope of these appended claims.

The application claims priority to the Chinese patent application No. 201610099285.8, filed on February 23, 2016 and entitled "Distance Measuring Module, 3D Scanning System and Distance Measuring Method".

## Claims

1. A binocular parallax distance measuring module, comprising a camera (100), wherein the camera (100) comprises:
a lens assembly (10) comprising a lens group and having an optical axis (OA);
a first mirror (21) and a second mirror (22);an optical splitting system (30) disposed in an optical path from the lens assembly (10) to the first mirror (21) and the second mirror (22), and configured to transmit the imaging light from the lens assembly (10) to the first mirror (21) and the second mirror (22), respectively;
a first image sensor (41) corresponding to the first mirror (21), being configured to receive imaging light from the first mirror (21) for imaging, and comprising a first photosensitive surface (S1) provided with a first center point (O1);
a second image sensor (42) corresponding to the second mirror (22), being configured to receive imaging light from the second mirror (22) for imaging, and comprising a second photosensitive surface (S2) provided with a second center point (O2);
a first optical module (61) disposed between the first mirror (21) and the first image sensor (41) and configured to lead the imaging light emitted from the first mirror (21) to the first image sensor (41); and
a second optical module (62) disposed between the second mirror (22) and the second image sensor (42) and configured to lead the imaging light emitted from the second mirror (22) to the second image sensor (42);
wherein the first optical module (61) and the second optical module (62) respectively comprise a group of mirrors; and
wherein a connecting line (0102) of the first center point (O1) and the second center point (O2) is perpendicular to the optical axis (OA) of the lens assembly (10); the first photosensitive surface (S1) and the second photosensitive surface (S2) are inclined relative to the connecting line (0102) of the first center point (O1) and the second center point (O2); a first included angle (β1) is formed between the first photosensitive surface (O1) and the connecting line (0102); a second included angle (β2) is formed between the second photosensitive surface (O2)and the connecting line (0102); and at least one of the first included angle (β1) or the second included angle (β2) is not zero.

2. The binocular parallax distance measuring module according to claim 1, wherein at least one of the first included angle (β1) or the second included angle (β2) is greater than 0°, and less than 90°.

3. The binocular parallax distance measuring module according to claim 1 or 2, wherein at least one of the first included angle (β1) or the second included angle (β2) is greater than or equal to about 70°, and less than 90°.

4. The binocular parallax distance measuring module according to any one of claims 1 to 3, wherein the first included angle (β1) and the second included angle (β2) are substantially equal to each other.

5. The binocular parallax distance measuring module according to claim 4, wherein the first image sensor (41) and the second image sensor (42) are symmetrically arranged relative to an axis which runs through a midpoint of the connecting line (0102) of the first center point (O1) and the second center point (O2) and is perpendicular to the connecting line (0102).

6. The binocular parallax distance measuring module according to any one of claims 1-5, further comprising:
a memory unit configured to store image information shot by the camera (100);
a processing unit configured to process the image information; and
a control unit configured to control the shooting action of the camera (100)

7. The binocular parallax distance measuring module according to any one of claims 1-6, further comprising: a loading platform (51, 52),
wherein the first image sensor (41) and the second image sensor (42) are disposed on the loading platform(51, 52), and
a side surface provided with the first image sensor (41) and a side surface provided with the second image sensor (42), of the loading platform (51, 52), are inclined relative to the connecting line (0102) of the first center point (O1) and the second center point (O2).

8. The distance measuring module according to any one of claims 1-6, further comprising:
at least two loading platforms (51,52) configured to mount the first image sensor (41) and the second image sensor (42), respectively, wherein
a side surface provided with the first image sensor (41) and a side surface provided with the second image sensor (42), of the two loading platforms (51, 52), are inclined relative to the connecting line of the first center point (O1) and the second center point (O2).

9. The binocular parallax distance measuring module according to any one of claims 1 to 5, further comprising: at least two printed circuit boards (PCBs), wherein the first image sensor (41) is disposed on one PCB, and the second image sensor (42) is disposed on the other PCB; and the two PCBs are inclined relative to the connecting line (0102) of the first center point (O1) and the second center point (O2).

10. The binocular parallax distance measuring module according to any one of claims 1 to 3, wherein a deflection angle of the first mirror (21) and/or a deflection angle of the second mirror (22) are/is adjusted to increase a distance from an image of an object to be measured formed on the first image sensor (41) and/or the second image sensor (42) to a center of the photosensitive surface of corresponding image sensor.

11. A three-dimensional, 3D, scanning system, comprising the distance measuring module according to any one of claims 1-10.

12. The 3D scanning system according to claim 11, further comprising: a housing, wherein the housing is provided with a camera hole; the distance measuring module is mounted on the inside of the housing; and the lens assembly (10) is exposed to the outside through the camera hole; or wherein the distance measuring module is mounted on the outside of the housing.

13. A binocular parallax distance measuring method using a distance measuring module, comprising:
shooting an image of an object to be measured via a camera (100) of the distance measuring module; and
determining a vertical distance h from the object to be measured to the camera (100) according to two images of the object to be measured formed in a first image sensor (41) and a second image sensor (42) of the camera (100),
wherein the camera (100) comprises:
a lens assembly (10) comprising a lens group and having an optical axis;
a first mirror (21) and a second mirror (22);
an optical splitting system (30) disposed in an optical path from the lens assembly (10) to the first mirror (21) and the second mirror (22), and configured to transmit the imaging light from the lens assembly (10) to the first mirror (21) and the second mirror (22), respectively;
wherein the first image sensor (41) corresponds to the first mirror (21) and is configured to receive imaging light from the first mirror (21) for imaging; the first image sensor (41) comprises a first photosensitive surface (S1) having a first center point (O1); the second image sensor (42) corresponds to the second mirror (22) and is configured to receive imaging light from the second mirror (22) for imaging; the second image sensor (42) comprises a second photosensitive surface (S2) having a second center point (O2);
a first optical module (61) disposed between the first mirror (21) and the first image sensor (41) and configured to lead the imaging light emitted from the first mirror (21) to the first image sensor (41); and
a second optical module (62) disposed between the second mirror (22) and the second image sensor (42) and configured to lead the imaging light emitted from the second mirror (22) to the second image sensor (42);
wherein the first optical module (61) and the second optical module (62) respectively comprise a group of mirrors; and
a connecting line (0102) of the first center point (O1) and the second center point (O2) is perpendicular to an optical axis (OA) of the lens assembly (10); the first photosensitive surface (S1) and the second photosensitive surface (S2) are inclined relative to the connecting line (0102) of the first center point (O1) and the second center point (O2); a first included angle (β1) is formed between the first photosensitive surface (S1) and the connecting line (0102); a second included angle (β2) is formed between the second photosensitive surface (S2) and the connecting line (0102); and at least one of the first included angle (β1) or the second included angle (β2) is not zero.

## Patentansprüche

1. Binokulares Parallaxen-Entfernungsmessmodul, mit einer Kamera (100), wobei die Kamera (100) aufweist:
eine Linsenanordnung (10), mit einer Linsengruppe und mit einer optischen Achse (OA);
einen ersten Spiegel (21) und einen zweiten Spiegel (22);
ein optisches Teilersystem (30), das in einem optischen Pfad von der Linsenbaugruppe (10) zu dem ersten Spiegel (21) und dem zweiten Spiegel (22) angeordnet und konfiguriert ist, das Abbildungslicht von der Linsenbaugruppe (10) zu dem ersten Spiegel (21) bzw. dem zweiten Spiegel (22) zu übertragen;
einen ersten Bildsensor (41), der dem ersten Spiegel (21) entspricht, der konfiguriert ist, Abbildungslicht von dem ersten Spiegel (21) zur Abbildung zu empfangen, und der eine erste lichtempfindliche Oberfläche (S1) aufweist, die mit einem ersten Mittelpunkt (O1) versehen ist;
einen zweiten Bildsensor (42), der dem zweiten Spiegel (22) entspricht, der konfiguriert ist, Abbildungslicht von dem zweiten Spiegel (22) für die Bildgebung zu empfangen, und der eine zweite lichtempfindliche Oberfläche (S2) aufweist, die mit einem zweiten Mittelpunkt (O2) versehen ist;
ein erstes optisches Modul (61), das zwischen dem ersten Spiegel (21) und dem ersten Bildsensor (41) angeordnet ist und konfiguriert ist, das von dem ersten Spiegel (21) emittierte Abbildungslicht zu dem ersten Bildsensor (41) zu leiten; und
ein zweites optisches Modul (62), das zwischen dem zweiten Spiegel (22) und dem zweiten Bildsensor (42) angeordnet ist und konfiguriert ist, das vom zweiten Spiegel (22) emittierte Abbildungslicht zum zweiten Bildsensor (42) zu leiten;
wobei das erste optische Modul (61) und das zweite optische Modul (62) jeweils eine Gruppe von Spiegeln aufweisen; und
wobei eine Verbindungslinie (0102) des ersten Mittelpunkts (O1) und des zweiten Mittelpunkts (O2) senkrecht zur optischen Achse (OA) der Linsenanordnung (10) verläuft; die erste lichtempfindliche Fläche (S1) und die zweite lichtempfindliche Fläche (S2) relativ zur Verbindungslinie (0102) des ersten Mittelpunkts (O1) und des zweiten Mittelpunkts (O2) geneigt sind; ein erster eingeschlossener Winkel (β1) zwischen der ersten lichtempfindlichen Oberfläche (O1) und der Verbindungslinie (0102) gebildet wird; ein zweiter eingeschlossener Winkel (β2) zwischen der zweiten lichtempfindlichen Oberfläche (O2) und der Verbindungslinie (0102) gebildet wird; und mindestens einer von dem ersten eingeschlossenen Winkel (β1) oder dem zweiten eingeschlossenen Winkel (β2) nicht Null ist.

2. Binokulares Parallaxen-Entfernungsmessmodul nach Anspruch 1, wobei mindestens einer von dem ersten eingeschlossenen Winkel (β1) oder dem zweiten eingeschlossenen Winkel (β2) größer als 0° und kleiner als 90° ist.

3. Binokulares Parallaxen-Entfernungsmessmodul nach Anspruch 1 oder 2, wobei mindestens einer des ersten eingeschlossenen Winkels (β1) oder des zweiten eingeschlossenen Winkels (β2) größer als oder gleich etwa 70° und kleiner als 90° ist.

4. Binokulares Parallaxen-Entfernungsmessmodul nach einem der Ansprüche 1 bis 3, wobei der erste enthaltene Winkel (β1) und der zweite enthaltene Winkel (β2) im Wesentlichen einander gleich sind.

5. Binokulares Parallaxen-Entfernungsmessmodul nach Anspruch 4, wobei der erste Bildsensor (41) und der zweite Bildsensor (42) symmetrisch zu einer Achse angeordnet sind, die durch einen Mittelpunkt der Verbindungslinie (0102) des ersten Mittelpunkts (O1) und des zweiten Mittelpunkts (O2) verläuft und senkrecht zu der Verbindungslinie (0102) steht.

6. Binokulares Parallaxen-Entfernungsmessmodul nach einem der Ansprüche 1 bis 5, ferner aufweisend:
eine Speichereinheit, die konfiguriert ist, die von der Kamera (100) aufgenommenen Bildinformationen zu speichern;
eine Verarbeitungseinheit, die konfiguriert ist, die Bildinformationen zu verarbeiten; und
eine Steuereinheit, die konfiguriert ist, den Aufnahmevorgang der Kamera (100) zu steuern.

7. Binokulares Parallaxen-Entfernungsmessmodul nach einem der Ansprüche 1 bis 6, ferner aufweisend: eine Ladeplattform (51, 52),
wobei der erste Bildsensor (41) und der zweite Bildsensor (42) auf der Ladeplattform (51, 52) angeordnet sind, und
eine mit dem ersten Bildsensor (41) vorgesehene Seitenfläche und eine mit dem zweiten Bildsensor (42) vorgesehene Seitenfläche der Ladeplattform (51, 52) relativ zu der Verbindungslinie (0102) des ersten Mittelpunkts (O1) und des zweiten Mittelpunkts (O2) geneigt sind.

8. Entfernungsmessmodul nach einem der Ansprüche 1 bis 6, das ferner aufweist:
mindestens zwei Ladeplattformen (51, 52), die konfiguriert sind, den ersten ( 41) bzw. den zweiten Bildsensor (42) zu montieren, wobei
eine mit dem ersten Bildsensor (41) vorgesehene Seitenfläche und eine mit dem zweiten Bildsensor (42) vorgesehene Seitenfläche der beiden Ladeplattformen (51, 52) relativ zu der Verbindungslinie des ersten Mittelpunkts (O1) und des zweiten Mittelpunkts (O2) geneigt sind.

9. Binokulares Parallaxen-Entfernungsmessmodul nach einem der Ansprüche 1 bis 5, das ferner aufweist: mindestens zwei Leiterplatten (PCBs), wobei der erste Bildsensor (41) auf einer PCB angeordnet ist und der zweite Bildsensor (42) auf der anderen PCB angeordnet ist; und die beiden PCBs relativ zu der Verbindungslinie (0102) des ersten Mittelpunkts (O1) und des zweiten Mittelpunkts (O2) geneigt sind.

10. Binokulares Parallaxen-Entfernungsmessmodul nach einem der Ansprüche 1 bis 3, wobei ein Ablenkungswinkel des ersten Spiegels (21) und/oder ein Ablenkungswinkel des zweiten Spiegels (22) anpassbar ist/sind, um einen Abstand von einem Bild eines zu messenden Objekts, das auf dem ersten Bildsensor (41) und/oder dem zweiten Bildsensor (42) gebildet wird, zu einer Mitte der lichtempfindlichen Oberfläche des entsprechenden Bildsensors zu vergrößern.

11. Dreidimensionales, 3D-, Abtastsystem, das das Entfernungsmessmodul nach einem der Ansprüche 1-10 aufweist.

12. 3D-Abtastsystem nach Anspruch 11, ferner mit: einem Gehäuse, wobei das Gehäuse mit einem Kameraloch versehen ist; das Entfernungsmessmodul an der Innenseite des Gehäuses angebracht ist; und die Linsenbaugruppe (10) durch das Kameraloch nach außen freiliegt; oder wobei das Entfernungsmessmodul an der Außenseite des Gehäuses angebracht ist.

13. Binokulares Parallaxen-Entfernungsmessverfahren unter Verwendung eines Entfernungsmessmoduls, das aufweist:
Aufnehmen eines Bildes eines zu messenden Objekts über eine Kamera (100) des Entfernungsmessmoduls; und
Bestimmen eines vertikalen Abstands h von dem zu messenden Objekt zu der Kamera (100) gemäß zwei Bildern des zu messenden Objekts, die in einem ersten Bildsensor (41) und einem zweiten Bildsensor (42) der Kamera (100) gebildet werden,
wobei die Kamera (100) aufweist:
eine Linsenanordnung (10) mit einer Linsengruppe und einer optischen Achse;
einen ersten Spiegel (21) und einen zweiten Spiegel (22);
ein optisches Teilersystem (30), das in einem optischen Pfad von der Linsenanordnung (10) zu dem ersten Spiegel (21) und dem zweiten Spiegel (22) angeordnet und konfiguriert ist, das Abbildungslicht von der Linsenanordnung (10) zu dem ersten Spiegel (21) bzw. dem zweiten Spiegel (22) zu übertragen; wobei der erste Bildsensor (41) dem ersten Spiegel (21) entspricht und konfiguriert ist, Abbildungslicht von dem ersten Spiegel (21) zur Abbildung zu empfangen; der erste Bildsensor (41) eine erste lichtempfindliche Oberfläche (S1) mit einem ersten Mittelpunkt (O1) aufweist; der zweite Bildsensor (42) dem zweiten Spiegel (22) entspricht und konfiguriert ist, Abbildungslicht von dem zweiten Spiegel (22) zur Abbildung zu empfangen; der zweite Bildsensor (42) eine zweite lichtempfindliche Oberfläche (S2) mit einem zweiten Mittelpunkt (O2) aufweist;
ein erstes optisches Modul (61), das zwischen dem ersten Spiegel (21) und dem ersten Bildsensor (41) angeordnet und konfiguriert ist, das von dem ersten Spiegel (21) emittierte Abbildungslicht zu dem ersten Bildsensor (41) zu leiten; und
ein zweites optisches Modul (62), das zwischen dem zweiten Spiegel (22) und dem zweiten Bildsensor (42) angeordnet ist und konfiguriert ist, das Abbildungslicht, das von dem zweiten Spiegel (22) emittiert wird, zu dem zweiten Bildsensor (42) zu leiten;
wobei das erste optische Modul (61) und das zweite optische Modul (62) jeweils eine Gruppe von Spiegeln aufweisen; und
eine Verbindungslinie (0102) des ersten Mittelpunkts (O1) und des zweiten Mittelpunkts (O2) senkrecht zu einer optischen Achse (OA) der Linsenanordnung (10) ist; die erste lichtempfindliche Oberfläche (S1) und die zweite lichtempfindliche Oberfläche (S2) relativ zu der Verbindungslinie (0102) des ersten Mittelpunkts (O1) und des zweiten Mittelpunkts (O2) geneigt sind; ein erster eingeschlossener Winkel (β1) zwischen der ersten lichtempfindlichen Oberfläche (S1) und der Verbindungslinie (0102) gebildet wird; ein zweiter eingeschlossener Winkel (β2) zwischen der zweiten lichtempfindlichen Oberfläche (S2) und der Verbindungslinie (0102) gebildet wird; und mindestens einer von dem ersten eingeschlossenen Winkel (β1) oder dem zweiten eingeschlossenen Winkel (β2) nicht Null ist.

## Revendications

1. Module de mesure de distance par parallaxe binoculaire, comprenant une caméra (100), dans lequel la caméra (100) comprend :
un assemblage de lentilles (10) qui comprend un groupe de lentilles et qui comporte un axe optique (OA) ;
un premier miroir (21) et un second miroir (22) ;
un système de division optique (30) qui est disposé dans un chemin optique depuis l'assemblage de lentilles (10) jusqu'au premier miroir (21) et au second miroir (22) et qui est configuré pour transmettre la lumière de formation d'image depuis l'assemblage de lentilles (10) jusqu'au premier miroir (21) et au second miroir (22), de façon respective ;
un premier capteur d'image (41) qui correspond au premier miroir (21), qui est configuré pour recevoir la lumière de formation d'image en provenance du premier miroir (21) pour la formation d'image et qui comprend une première surface photosensible (S1) qui est munie d'un premier point central (O1);
un second capteur d'image (42) qui correspond au second miroir (22), qui est configuré pour recevoir la lumière de formation d'image en provenance du second miroir (22) pour la formation d'image et qui comprend une seconde surface photosensible (S2) qui est munie d'un second point central (O2) ;
un premier module optique (61) qui est disposé entre le premier miroir (21) et le premier capteur d'image (41) et qui est configuré pour acheminer la lumière de formation d'image qui est émise depuis le premier miroir (21) jusqu'au premier capteur d'image (41) ; et
un second module optique (62) qui est disposé entre le second miroir (22) et le second capteur d'image (42) et qui est configuré pour acheminer la lumière de formation d'image qui est émise depuis le second miroir (22) jusqu'au second capteur d'image (42) ;
dans lequel le premier module optique (61) et le second module optique (62) comprennent respectivement un groupe de miroirs ; et
dans lequel une ligne de connexion (0102) du premier point central (O1) et du second point central (O2) est perpendiculaire à l'axe optique (OA) de l'assemblage de lentilles (10) ; la première surface photosensible (S1) et la seconde surface photosensible (S2) sont inclinées par rapport à la ligne de connexion (0102) du premier point central (O1) et du second point central (O2); un premier angle inclus (β1) est formé entre la première surface photosensible (S1) et la ligne de connexion (0102) ; un second angle inclus (β2) est formé entre la seconde surface photosensible (S2) et la ligne de connexion (0102) ; et au moins un angle inclus parmi le premier angle inclus (β1) et le second angle inclus (β2) n'est pas égal à zéro.

2. Module de mesure de distance par parallaxe binoculaire selon la revendication 1, dans lequel au moins un angle inclus parmi le premier angle inclus (β1) et le second angle inclus (β2) est supérieur à 0° et inférieur à 90°.

3. Module de mesure de distance par parallaxe binoculaire selon la revendication 1 ou 2, dans lequel au moins un angle inclus parmi le premier angle inclus (β1) et le second angle inclus (β2) est supérieur ou égal à environ à 70° et inférieur à 90°.

4. Module de mesure de distance par parallaxe binoculaire selon l'une quelconque des revendications 1 à 3, dans lequel le premier angle inclus (β1) et le second angle inclus (β2) sont sensiblement égaux l'un à l'autre.

5. Module de mesure de distance par parallaxe binoculaire selon la revendication 4, dans lequel le premier capteur d'image (41) et le second capteur d'image (42) sont agencés de façon symétrique par rapport à un axe qui passe par un point médian de la ligne de connexion (0102) du premier point central (O1) et du second point central (O2) et qui est perpendiculaire à la ligne de connexion (0102).

6. Module de mesure de distance par parallaxe binoculaire selon l'une quelconque des revendications 1 à 5, comprenant en outre :
une unité de mémoire qui est configurée pour stocker une information d'image prise par la caméra (100) ;
une unité de traitement qui est configurée pour traiter l'information d'image ; et
une unité de commande qui est configurée pour commander l'action de prise d'image de la caméra (100).

7. Module de mesure de distance par parallaxe binoculaire selon l'une quelconque des revendications 1 à 6, comprenant en outre :
une plate-forme de chargement (51, 52) ;
dans lequel le premier capteur d'image (41) et le second capteur d'image (42) sont disposés sur la plate-forme de chargement (51, 52) ; et
une surface latérale qui est munie du premier capteur d'image (41) et une surface latérale qui est munie du second capteur d'image (42), de la plate-forme de chargement (51, 52), sont inclinées par rapport à la ligne de connexion (0102) du premier point central (O1) et du second point central (O2).

8. Module de mesure de distance par parallaxe binoculaire selon l'une quelconque des revendications 1 à 6, comprenant en outre :
au moins deux plates-formes de chargement (51, 52) qui sont configurées pour recevoir respectivement en montage le premier capteur d'image (41) et le second capteur d'image (42) ;
dans lequel une surface latérale qui est munie du premier capteur d'image (41) et une surface latérale qui est munie du second capteur d'image (42), des deux plates-formes de chargement (51, 52), sont inclinées par rapport à la ligne de connexion (0102) du premier point central (O1) et du second point central (O2).

9. Module de mesure de distance par parallaxe binoculaire selon l'une quelconque des revendications 1 à 5, comprenant en outre au moins deux cartes de circuit imprimé (PCB), dans lequel le premier capteur d'image (41) est disposé sur une PCB et le second capteur d'image (42) est disposé sur l'autre PCB ; et les deux PCB sont inclinées par rapport à la ligne de connexion (0102) du premier point central (O1) et du second point central (O2).

10. Module de mesure de distance par parallaxe binoculaire selon l'une quelconque des revendications 1 à 3, dans lequel un angle de déviation du premier miroir (21) et/ou un angle de déviation du second miroir (22) sont/est réglé(s) pour augmenter une distance depuis une image d'un objet à mesurer qui est formée sur le premier capteur d'image (41) et/ou le second capteur d'image (42) jusqu'à un centre de la surface photosensible du capteur d'image correspondant.

11. Système de balayage tridimensionnel, 3D, comprenant le module de mesure de distance selon l'une quelconque des revendications 1 à 10.

12. Système de balayage 3D selon la revendication 11, comprenant en outre : un boîtier, dans lequel le boîtier est muni d'un trou de caméra ; le module de mesure de distance est monté sur l'intérieur du boîtier ; et l'assemblage de lentilles (10) est exposé à l'extérieur au travers du trou de caméra ; ou dans lequel le module de mesure de distance est monté sur l'extérieur du boîtier.

13. Procédé de mesure de distance par parallaxe binoculaire utilisant un module de mesure de distance, comprenant :
la prise d'une image d'un objet à mesurer via une caméra (100) du module de mesure de distance ; et
la détermination d'une distance verticale h depuis l'objet à mesurer jusqu'à la caméra (100) en fonction de deux images de l'objet à mesurer qui sont formées dans un premier capteur d'image (41) et un second capteur d'image (42) de la caméra (100) ;
dans lequel la caméra (100) comprend :
un assemblage de lentilles (10) qui comprend un groupe de lentilles et qui comporte un axe optique ;
un premier miroir (21) et un second miroir (22) ;
un système de division optique (30) qui est disposé dans un chemin optique depuis l'assemblage de lentilles (10) jusqu'au premier miroir (21) et au second miroir (22) et qui est configuré pour transmettre la lumière de formation d'image depuis l'assemblage de lentilles (10) jusqu'au premier miroir (21) et au second miroir (22), de façon respective ;
dans lequel le premier capteur d'image (41) correspond au premier miroir (21) et est configuré pour recevoir la lumière de formation d'image en provenance du premier miroir (21) pour la formation d'image ; le premier capteur d'image (41) comprend une première surface photosensible (S1) qui est munie d'un premier point central (O1) ; le second capteur d'image (42) correspond au second miroir (22) et est configuré pour recevoir la lumière de formation d'image en provenance du second miroir (22) pour la formation d'image ; le second capteur d'image (42) comprend une seconde surface photosensible (S2) qui est munie d'un second point central (O2) ;
un premier module optique (61) qui est disposé entre le premier miroir (21) et le premier capteur d'image (41) et qui est configuré pour acheminer la lumière de formation d'image qui est émise depuis le premier miroir (21) jusqu'au premier capteur d'image (41) ; et
un second module optique (62) qui est disposé entre le second miroir (22) et le second capteur d'image (42) et qui est configuré pour acheminer la lumière de formation d'image qui est émise depuis le second miroir (22) jusqu'au second capteur d'image (42) ;
dans lequel le premier module optique (61) et le second module optique (62) comprennent respectivement un groupe de miroirs ; et
dans lequel une ligne de connexion (0102) du premier point central (O1) et du second point central (O2) est perpendiculaire à un axe optique (OA) de l'assemblage de lentilles (10) ; la première surface photosensible (S1) et la seconde surface photosensible (S2) sont inclinées par rapport à la ligne de connexion (0102) du premier point central (O1) et du second point central (O2) ; un premier angle inclus (β1) est formé entre la première surface photosensible (S1) et la ligne de connexion (0102) ; un second angle inclus (β2) est formé entre la seconde surface photosensible (S2) et la ligne de connexion (0102) ; et au moins un angle inclus parmi le premier angle inclus (β1) et le second angle inclus (β2) n'est pas égal à zéro.
